Europäisches Patentamt

(19) European Patent Office

Office européen des brevets

(11) Publication number: **0 027 191**
**B1**

(12)     **EUROPEAN PATENT SPECIFICATION**

(45) Date of publication of patent specification: **21.03.84**

(51) Int. Cl.³: **B 32 B 17/04, B 29 D 3/02, B 29 D 7/00**

(21) Application number: **80105804.1**

(22) Date of filing: **25.09.80**

(54) Polyamide release film for sheet molding compound, sheet compound prepared therewith and process of making.

(30) Priority: **10.10.79 US 83502**

(43) Date of publication of application:
**22.04.81 Bulletin 81/16**

(45) Publication of the grant of the patent:
**21.03.84 Bulletin 84/12**

(84) Designated Contracting States:
**DE FR GB IT**

(56) References cited:
**EP - A - 0 002 953**
**GB - A - 956 926**
**GB - A - 1 102 852**
**GB - A - 1 399 284**
**GB - A - 1 399 463**
**US - A - 3 093 255**
**US - A - 3 734 814**

(73) Proprietor: **ALLIED CORPORATION**
**Columbia Road and Park Avenue P.O. Box 2245R**
**(Law Dept.)**
**Morristown New Jersey 07960 (US)**

(72) Inventor: **Bollen, Philip Stuart**
**203 Tulane Road**
**Ventura, California 93003 (US)**
Inventor: **Degrassi, Alfrieri**
**Pottsville, P. O. Box 564**
**Pottsville, Pennsylvania 17901 (US)**
Inventor: **Sacks, William**
**686 Longhill Road**
**Gillette, New Jersey 07933 (US)**

(74) Representative: **Baillie, Iain Cameron et al,**
**c/o Ladas & Parry Isartorplatz 5**
**D-8000 München 2 (DE)**

Courier Press, Leamington Spa, England.

# Polyamide release film for sheet molding compound sheet compound prepared therewith and process of making

## Field of the invention

This invention relates to blended polyamide/polyolefin film, of low crystallinity, suitable for use in the preparation of sheet molding compound.

## Background of the invention

A considerable amount of effort and progress is being made in the technology of reinforcing plastics. Spurred mainly by the need of the automobile industry to produce lighter weight, more energy-efficient automobiles, much of the present activity in this field has been devoted to producing plastics with enough strength and durability to replace many of the metal structural support members of the auto body. The reinforced plastic part must exhibit similar structural strength and integrity as the metal component while simultaneously reducing its weight at equal, or preferably, lower cost. As a result, a large amount of activity in developing high strength structural composites has been devoted to upgrading sheet molding compound (SMC), which allows relatively fast matched-die molding methods.

SMC is generally comprised of crosslinkable polymeric resin, particularly unsaturated polyester, particulate filler, chopped fiber reinforcement, as well as various other additives in minor amounts. This composite material is usually prepared by depositing the chopped fiber on a layer of fluid resin supported on a moving polyethylene film, then placing another layer of polyethylene film on top to form a sandwiched composite which is passed through a series of kneading and compaction rolls and is usually wound into large rolls. These rolls are usually wrapped with aluminum foil to prevent loss of monomer, usually styrene, which acts as a cross-linking agent for the polyester resin. After a maturation period, of about 2—5 days during which the polyester partially cures and increases in viscosity to a moldable consistency, the SMC is used to produce molded parts for automobiles, boats, etc., by cutting a piece of appropriate size from the roll, peeling away the polyethylene carrier film, and placing the SMC in a heated mold for simultaneous molding and complete curing. Thus, SMC sandwich composites are finding ready application in compression molding procedures, and particularly in matched die molding operations.

However, during manufacture of the sandwich structure and subsequent storage of the SMC roll, loss of styrene monomer occurs through the polyethylene film since it is relatively permeable, which results in poor product flow and unacceptable molded parts, as well as creating an odor and health hazard in the SMC manufacturing line and storage area. In addition, polyethylene film even though it has good peelability for SMC, has a low tear strength which results in tearing and stretching of the film during the SMC manufacturing process which results in process interruption and down time which increases the cost of the process. Therefore, there is a need for a film suitable for use in the production of SMC sandwich composites that will be relatively impermeable to styrene monomer, have good release properties and be resistant to tearing during the operation of manufacturing the SMC sandwich composite.

## Summary of the invention

We have unexpectedly found that a film comprising a blend of polyamide and 10—30 wt.% polyolefin component, or copolymer thereof, and exhibiting low crystallinity, is an excellent carrier film for producing sandwich composites of SMC. The polyamide component of the film provides good tear strength and excellent styrene impermeability, while the polyolefin component provides good peelability of the film.

In a preferred embodiment, the film is comprised of a blend of polycaprolactam, 10—15 wt. percent of ethylene/vinyl acetate copolymer and 0.5 to 1.0 wt. percent of the blend, of particulate titanium dioxide filler. The titanium dioxide is preferably present to distinguish the film layer from the SMC such that the peelability, i.e. the amount of SMC adhering to the film can be easily determined visually.

In accordance with this invention, there is provided a process for producing sheet molding compound.

Further provided is an SMC sandwich composite produced by the above-described subject process.

In addition there is provided a polyamide film for use in the manufacture of sheet molding compound.

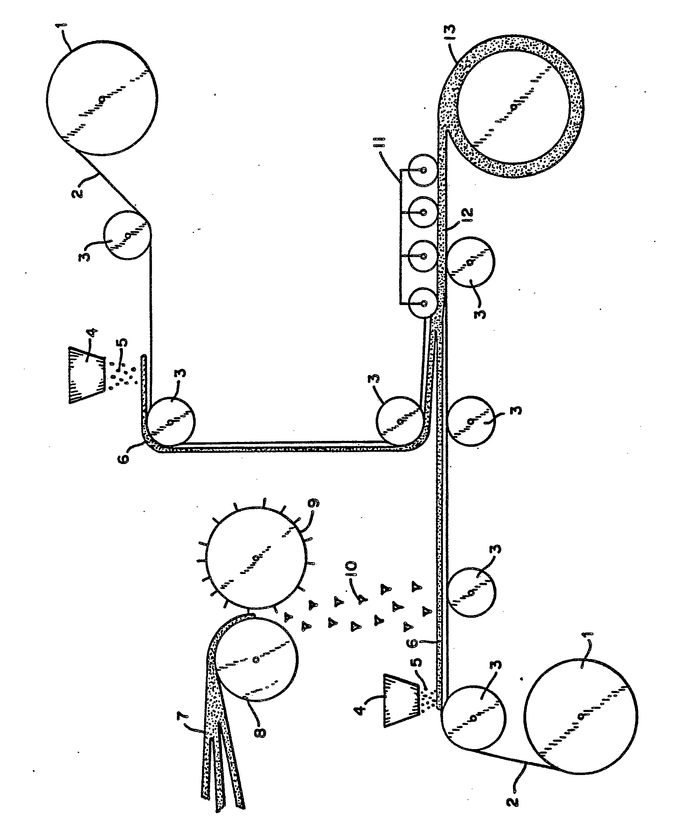

## Brief description of the drawing

The figure illustrates a preferred embodiment in the process for producing SMC sandwich composites. Shown are film layers having SMC resin, deposited thereon, chopped fiber being deposited thereon, and the sandwich composite being formed, compacted and wound.

## Description of the preferred embodiment

Polyamides suitable for use in producing the subject film include low crystallinity polyepsiloncaprolactam, or "polycaprolactam" as used herein, polyhexamethylene adipamide, or mixtures thereof, having a viscosity average molecular weight of at least about 10,000 and preferably from about 15,000 to 40,000. The formic acid viscosity (FAV) is generally in the region of about 50 to 200 and preferably about 70 to 130. The polyamide component is present in 90—70 weight percent of the blend comprising the film, and preferably 90—85% by weight of the blend.

In the context of the present invention, by the term "polyolefin component", is meant completely or substantially linear high molecular weight polymers of alpha-olefins, for example polyethylene, polypropylene or polyisobutylene, and copolymers of alpha-olefins with vinyl acetate monomers, for example ethylene/vinyl acetate copolymer, or alkyl acrylates such as ethylene methylacrylate or ethylene/ethylacrylate copolymers. The above polyolefins can be obtained by any of the usual processes, for example by "high pressure polymerization" (U.K. Patent 471,590) by "low-pressure polymerization" (West German Patent No. 973,626) in the presence of Ziegler catalysts, or by radically initiated bulk, suspension or emulsion polymerization. The polyolefin component is preferably of low crystallinity with a molecular weight of about 1,000 to 1,000,000, and preferably about 10,000 to 500,000. This corresponds to a melt flow index (M.F.I.) of about 0.1 to 300 in standard units. Preferred polyolefin component in the subject film is ethylene/vinyl acetate copolymer.

The film of the present invention can be prepared by thoroughly blending together the polyamide, 10 to 30 wt.%, preferably 10 to 15 wt.% of polyolefin component, and various minor amounts of conventionally used additives such as pigments, heat stabilizers, antistatic agents, and the like, followed by hot melt extrusion. Preferably a white pigment such as titanium dioxide, present in 0.25 to 2.0 weight percent of the blend, and preferably present in 0.5 to 1.5 weight percent of the blend, is used so that it can easily be determined that all of the release film has been removed from the SMC.

Generally, it is preferred to utilize the titanium dioxide as a dispersion in the polyolefin component to be used. Preferably, the titanium dioxide is utilized as a 40 weight percent dispersion in ethylene/vinyl acetate copolymer having a melt flow index of about 1 to 10 standard units.

Representative examples of suitable blending devices for forming the blend are drum tumblers, Banbury mixers, twin screw extruders, and heated roll mills. The temperature of the blending step is usually conducted at about ambient temperature. The blend is then charged into a hot melt extruder equipped with a film-forming die, and the resulting film, being of a thickness from 0.5 to 5 mils (12.7 to 127 $\mu$m), preferably from about 0.75 to 2 mils (19.1 to 50.8 $\mu$m), is passed onto a casting roll maintained at a temperature from about 50 to 90°C, and preferably about 70 to 80°C. It will be noted that the temperature of the casting roll is important so that the polyamide portion of the resulting film be substantially in a low crystallinity range for good tear strength. A desired crystallinity of the film is less than 35%, and preferably less than about 25%.

By the term "low crystallinity", as used herein, is meant the measurable crystallinity of the main component, the polyamide component. The crystallinity of the polyamide component is determined by conventional X-ray diffraction techniques; where the polyamide is polycaprolactam, the method used is that described in the reference Journal of Polymer Science, Vol. B(1), p. 603 (1963), by L. Roldan. This technique measures the amount of "gamma crystallinity", which is specific to polycaprolactam. If the polyamide is polyhexamethylene diamine adipamide, the method described in the reference "Nylon Plastics", Chapter 8, J. Wiley and Sons, New York, 1973, is used. If the film is comprised of a blend of both of the above polyamides, both of these methods can be used to determine the total polyamide crystallinity. The reason why a low polyamide crystallinity is desired is that the tear strength of the film, is a function of low crystallinity, i.e. the lower the crystallinity, the greater the tear strength.

As described above, the film must possess a polyamide crystallinity of less than 35% and preferably of 10 to 25% for good tear strength properties.

The crystallinity of the polyolefin component should also be of a low value and should be below 70% and preferably 20 to 50%. Measurements of the crystallinity can be determined by the known techniques of density or X-ray measurements.

By the term "tear strength", as used herein, is meant the Graves tear strength, as determined by ASTM D-1004-66, and is a measure of the force expressed in grams needed to tear the film under standardized conditions. The film should have a tear strength of at least 400 grams, and preferably from 400—700 grams.

The film should also have a styrene permeability of below $200 \times 10^{-9}$ g-cm/cm²-hr., as determined by the method described in the reference, American Institute of Chemical Engineers, 53rd National Meeting, Preprint No. 32d, 1964, by Bixler and Michaels, hereby incorporated by reference. By the term "styrene permeability" is meant the value of P, correctly termed "permeability factor", in the equation:

$$P = \frac{QL}{A} \text{ (grams-cm./cm}^2\text{-hr.)}$$

where
Q=weight loss in grams/hr.
L=thickness of the film in cm.
A=area of the film tested in cm².

The method as described in the above reference, includes contacting a film of measured thickness with liquid styrene monomer in a cup apparatus at 23°C. A stream of air is directed over the film and a plot of cup weight versus time is constructed. After a steady state is reached, the value of Q is obtained from which P can be calculated. An acceptable value for plant operation would be $200 \times 10^{-9}$ g-cm/cm²-hr. and preferably, of about 0.1 to $100 \times 10^{-9}$ g-cm/cm²-hr to facilitate maintaining plant air quality within OSHA requirements.

The film should also exhibit a peel adhesion or "peelability" such that the film peels off easily from the SMC material prior to molding with only minor amounts of SMC adhered to the film contacting surface. Preferably, the extent of adhering of the SMC to the film surface should be 5% of each film surface, i.e. upper and lower film surfaces, or below for acceptable performance. The peelability test is conducted by maintaining the SMC sandwich composite at 26—32°C for 3 days and then peeling off the film and visually observing the amount of SMC adhered thereto the contacting film surface.

Thus, also a subject of this invention is a polyamide film for use in the manufacture of sheet molding compound sandwiched composites wherein said film is of low crystallinity and comprised of a blend of a polyamide with a crystallinity of less than 35%, said polyamide being selected from polyepsiloncaprolactam, polyhexamethylene adipamide, or mixtures thereof, and 10 to 30 weight percent of the blend of polyolefin component, or copolymer thereof, with a crystallinity of less than 50%, wherein said film is 0.5 to 5 mils (12.7 to 127 $\mu$m) thick and exhibits (a) a Graves tear strength of at least 400 grams in the longitudinal direction, as determined by ASTM-D-1004-66; and (b) a styrene permeability of below $200 \times 10^{-9}$ g.cm/cm²-hr.

Preferred is where said polyamide is polyepsiloncaprolactam, said polyolefin component is ethylene/vinyl acetate copolymer, having preferably a crystallinity of 20—50%, present in 10—15 weight percent of the blend and said film having a Graves tear strength of at least 400 up to 800 grams.

Particularly preferred is where said film also contains from 0.5 to 1.5 mil, preferably up to about 1.0 weight percent of titanium dioxide filler, based on the weight of said blend of polymers.

A general description of the subject process can be given by reference to the Figure. Storage rolls 1 release stored film 2 onto carrier/conveyor rolls 3 which transport the subject film 2 throughout the sandwich-forming process. Dispensers 4 deposit fluid SMC resin/filler paste 5 onto film 2 forming resin filler layer 6. In the Figure, to the bottom layer 6, glass reinforcement is added whereby continuous strand roving 7 is guided and advanced by roller 8 positioned in relation to cutter 9 such that the roving strand 7 is chopped into smaller size reinforcing pieces 10, of about 1″ (2.54 cm) in length which are then deposited onto layer 6 of the advancing coated film. The layered film is collected on mandrel 13 to form a roll of SMC sandwich of composite.

The above-described embodiment is the usual method of producing SMC sandwich composite, in which the carrier film has been preformed in a separate step, stored, and is then removed and used in the process. An alternate process would be where the film is produced in two different film extrusion/casting operations and utilized directly to make SMC sandwich composite. In practice, the distance from lower roll 1 to the mandrel 13, is actually very long being up to about 9,144 m or more. This however, is determined by plant size and other operating factors obvious to one skilled in the art.

The novelty in the subject process is the use of the subject nylon/polyolefin film as a carrier-liner film for producing SMC sandwiched composite, which possesses the desirable qualities needed for effective utilization of SMC on a commercial scale. The operating variables with respect to type of apparatus, speed of the film, and temperatures employed in the process are all well known in the art and need not be reiterated. An excellent description of the general process using polyethylene as the filler carrier can be found in "Handbook of Technology and Engineering of Reinforced Plastics/composites, pp. 207—237, Van Nostrand Reinhold, New York, 1973.

A typical SMC compound used to produce automotive parts generally contains the following components; *resin*—formed from (1) *unsaturated* acids or acid anhydrides such as fumaric acid and/or maleic anhydride combined with (2) *saturated* acids or acid anhydrides such as phthalic anhydride and/or isophthalic acid or adipic acid reacted with (3) glycols or diglycols such as ethylene glycol, propylene glycol, diethylene glycol or dipropylene glycol; *crosslinking* monomer such as styrene or vinyl toluene; *catalyst*—peroxides or peracids such as t-butyl perbenzoate; *catalyst activator*—metallic soaps such as zinc stearate; *mineral extenders or filler*—e.g. calcium carbonate; *pigment*—e.g. iron oxide; and *thickening agent*—e.g. magnesium hydroxide.

An example of the amounts of these components is:

|  | parts |
| --- | --- |
| resin and monomer | 100 |
| catalyst | 1 |
| catalyst activator | 3 |
| filler | 150 |
| pigment | 3 |
| thickening agent | 3.8 |

To this resin mixture, chopped glass fiber, of about 1 to 2 inches (2.54 to 5.08 cm) in size, and/or other fibrous reinforcements such as carbon or metal fiber are added.

Thus, also a subject of this invention is in a process for producing sheet molding compound comprising:

a) casting a layer of heat-curable thermosetting resin, in fluid form, onto a continuously advancing polymeric film;

b) introducing reinforcing material onto the advancing fluid layer;

c) contacting a polymeric film to the top surface of said reinforced fluid layer thereby forming a sandwiched composite.

d) advancing said sandwiched composite through a series of kneading and compaction rolls, and

e) winding the sandwiched composite into a roll for partial curing;

the improvement which comprises using a polymeric film having low crystallinity, the film having a thickness of 0.5 to 5 mils (12.7 to 127 $\mu$m), comprised of a blend of a polyamide selected from polyhexamethylene adipamide, polyepsiloncaprolactam, or mixtures thereof, the polyamide having a crystallinity of less than 35%, and 10 to 30 percent by weight of said blend, of a polyolefin component, or copolymer thereof, the polyolefin having a crystallinity of less than 70% wherein said film, exhibits (a) a Graves tear strength of at least 400 grams in the longitudinal direction, as determined by ASTM-D-1004-66; (b) a styrene permeability of below $200 \times 10^{-9}$ g-cm/cm²hr, and (c) a peelability such that after maintaining said sandwiched composite at 26—32°C for 3 days, less than 5 percent of the contacting surface of said film has adhered sheet molding compound thereto, after peeling.

Preferred is where the improvement comprises using as the polymeric film a low crystallinity polyamide film, of 0.5 to 5 mils (12.7 to 127 $\mu$m) thick, comprised of a blend of polyepsiloncaprolactam and 10 to 30 percent by weight of said blend, of ethylene/vinyl acetate copolymer, wherein said film exhibits a styrene permeability of below about $100 \times 10^{-9}$ g-cm/cm²-hr.

Also a subject of this invention is an SMC sandwich structure produced by the above-described process incorporating the above-described film.

The following examples are illustrative of the best mode of carrying out the invention as contemplated by us and should not be construed as being limitations on the scope or spirit of the instant invention.

Example 1

201 kg of polyepsiloncaprolactam (having a relative viscosity of 73 measured in 90% formic acid at a concentration of 9.2% by weight) was blended in a drum tumbler with 22.6 kg of ethylene/vinyl acetate copolymer containing 9% vinyl acetate (having a M.F.I. of 3) and 1.36 Kg of 40% titanium dioxide dispersion in ethylene/vinyl acetate. This blend, corresponding to about 10% by weight of ethylene/vinyl acetate, was charged to a 3 1/2 inch (8.89 cm) diameter (30:1 length to diameter ratio) single screw extruder equipped with a Maddox mixing screw and a 65 inch (165.1 cm) wide flat film die. The extruder was maintained at a temperature of 257° to 270°C from feedport to die with the die maintained at about 260°C. The molten blend was extruded at 75 RPM with an output of 275 lbs/hr (123.75 kg). The molten blend was then extruded onto a casting roll maintained at 80°C where it was drawn to a film thickness of 1 mil (25.4 $\mu$m). The resulting film was then wound onto a roll using a double shaft winder. The resulting film exhibited a Graves tear strength of 700 grams, and a styrene permeability of about $3 \times 10^{-9}$ g.cm/cm²-hr. The gamma crystallinity of the polycaprolactam component was 24%.

The resulting film was then utilized as a carrier film for forming a sandwich composite with SMC. Onto the above-described film, in a continuously advancing fashion, was deposited fluid, standard SMC containing:

| | |
|---|---|
| 100 | parts Owens-Corning resin E-920-1, containing: |
| 40 | parts styrene monomer, |
| 150 | parts calcium carbonate, |
| 3 | parts zinc stearate, |
| 1 | part tertiary-butyl benzoate |
| 3 | parts iron oxide, and |
| 3.8 | parts magnesium hydroxide |

Glass fiber, of 1 inch (2.54 cm) length was then deposited onto the fluid layer, forming the sheet molding compound. To the surface of the fluid layer was deposited another layer of the above-described blended nylon film to form a sandwiched composite. The formed composite was then wound in a roll for storing. The shelf life of the sheet molding compound in the prepared sandwiched composite utilizing nylon/ethylene vinylacetate carrier film, was compared with identical sheet molding compound made using polyethylene carrier film of the same thickness. After one week at 32°C, the SMC having polyethylene as the carrier film, was found to be hard and nonformable, evidence of styrene loss whereas even after three weeks the SMC having the nylon carrier film was still soft and pliable and could be satisfactorily compression molded.

Example 2

A series of eight films of 1 mil (25.4 $\mu$m) thickness were produced following the procedure and using the apparatus described in Example 1 except that the amount of ethylene/vinyl acetate used in the blend was varied in the range from 0 to 40% by weight. The resulting films were tested for Graves tear strength according to ASTM D-1004-66, in the machine and transverse directions. The results are shown below in Table I for the machine direction.

In addition, the peelability of the resulting films was also tested, from SMC sandwiched composites, produced as described by the method in Example 1. The resulting SMC sandwiched composites were maintained in an oven for 3 days at 26 to 32°C. and the EVA/polyamide carrier film separated by peeling by hand. The peelability was based on an objective evaluation of the amount of SMC compound which adhered to the contacting film surface viz:

| Peelability ranking | % Film surface area having retained SMC |
| --- | --- |
| poor | 20 to 30% or more |
| good | 5% or less |
| excellent | essentially nil |

The results of the peelability are shown below in Table I.

### TABLE I
### E/VA—polycaprolactam films

| Run | Wt.% EVA | Peelability | Machine direction graves tear strength grams |
| --- | --- | --- | --- |
| 1 | 0 | poor | 624 |
| 2 | 5 | poor | 690 |
| 3 | 10 | good | 788 |
| 4 | 15 | good | 720 |
| 5 | 20 | excellent | 580 |
| 6 | 25 | excellent | 530 |
| 7 | 30 | excellent | 450 |
| 8 | 40 | excellent | less than 400 |

Note that only films with about 10 to 30% by weight E/VA, (Runs 3—7) exhibited good to excellent peelability while the Graves tear strength in the machine direction declined to less than 400 grams at a 40% by weight level of E/VA.

Example 3

A series of films were made following the procedure of Example 1 by extruding mixtures of polyepsiloncaprolactam blended with 0 to 30% by weight of low density polyethylene having a melt flow index (M.F.I.) of 3.5. Graves tear tests were made on 1 mil (25.4 $\mu$m) films extruded from these mixtures and peelability tests were made on SMC sandwich composites prepared according to the procedure in Example 1. The results are shown below in Table II.

### TABLE II
### Polyethylene/polycaprolactam films

| Run | Wt.% polyethylene | Peelability | Machine direction graves tear strength grams |
| --- | --- | --- | --- |
| 1 | 0 | poor | 624 |
| 2 | 10 | good | 720 |
| 3 | 15 | good | 680 |
| 4 | 20 | excellent | 530 |
| 5 | 25 | excellent | 530 |
| 6 | 30 | excellent | about 400 |

Results in Table II show that good to excellent peel characteristics were obtained between 10 and 30% by weight low density polyethylene in the blends while at 30% by weight composition the tear strength was marginal but still acceptable.

Example 4

Following the procedure of Example 1, 1 mil (25.4 $\mu$m) thick films were made from the following compositions: polycaprolactam/10 weight % E/VA and 1.5 weight % TiO$_2$; and polyhexamethylene adipamide/10 weight % E/VA and 1.5 weight % TiO$_2$. Both films exhibited Graves tear strengths of 720 and 750 grams, respectively. SMC sandwiched composites were prepared from the films according to the procedure of Example 1, and both films exhibited good peel strength by the test described in Example 2.

Example 5

1 mil (25.4 $\mu$m) films were produced according to the procedure of Example 1, from 20% E/VA by weight and polycaprolactam; 20% by weight ethylene/ethyl acetate (EEA) and polycaprolactam; 20% by weight polypropylene (M.F.I.=3) and polycaprolactam; and were tested for permeability to liquid styrene monomer compared to 1 mil (25.4 $\mu$m) unmodified polycaprolactam film and to 2 mil (50.8 $\mu$m) low density (M.F.I.=2) unmodified polyethylene film.

Measurements of the styrene permeability of the films were made by the method of Bixlar and Michaels described hereinabove. Results are shown below in Table III.

TABLE III

Styrene monomer liquid permeability at 25°C in $10^{-9}$grams-cm/cm$^2$-hr.

| | |
|---|---|
| 20% E/VA; polycaprolactam (1 mil) (25.4 $\mu$m) | 8 |
| unmodified polycaprolactam (1 mil) (25.4 $\mu$m) | 9 |
| 20% EEA; polycaprolactam (1 mil) (25.4 $\mu$m) | 27 |
| 20% polypropylene; polycaprolactam (1 mil) (25.4 $\mu$m) | 42 |
| low density polyethylene (2 mils) (50.8 $\mu$m) | 28000 |

Note that the addition of 20% by weight E/VA EEA or polypropylene had little effect on styrene permeability, very low values being obtained for both unmodified and modified polycaprolactam films while styrene permeability for low density polyethylene was about 3000 times higher.

Example 6

Following the procedure of Example 1, two films, designated A and B, were produced from a blend of polycaprolactam, 10% by weight of ethylene-vinyl acetate copolymer, and 1.5% by weight of the blend, of pigmented ethylene-vinyl acetate containing titanium dioxide, but using different casting roll temperatures during film formation.

Sample A was produced using a casting roll temperature of 80°C, while Sample B was extruded at a casting roll temperature of 105°C. Graves tear tests were made on both samples with the following results:

Sample A—640 grams in the machine direction
Sample B—340 grams in the machine direction

Thus, it is evident that higher casting roll temperatures presumably result in higher crystallinity films having unacceptable Graves tear strengths.

Example 7

Since the presence of both the ethylene/vinyl acetate copolymer (which has some polyethylene crystallinity) and titanium dioxide, which is also a crystalline compound, make a direct determination of the crystallinity level of the polyamide component difficult in the subject film, this level was determined indirectly.

Samples of film were produced from polycaprolactam alone, without the EVA and titanium dioxide components, by using casting roll temperatures in the range of 50 to 90°C. Measurements of the x-ray crystallinity of the gamma form present in the resulting polycaprolactam were made following the procedure described hereinabove. Values of less than 35% crystallinity were attained. In the preferred casting roll temperature range of 75 to 80°C, the crystallinity levels were less than 25%. The Graves tear strength values for the above-produced films were in the range of 600 to 700 grams.

**Claims**

1. A process for producing sheet molding compound wherein:

a) a layer of heat-curable thermosetting resin is cast, in fluid form, onto a continuously advancing polymeric film;

b) reinforcing material is introduced onto the advancing fluid layer;

c) a polymeric film is placed in contact with the top surface of said reinforced fluid layer thereby forming a sandwiched composite;

d) advancing said sandwiched composite through a series of kneading and compaction rolls, and

e) winding the sandwiched composite into a roll for partial curing;

characterized in that a polymeric film having low crystallinity is used, said film having a thickness of 0.5 to 5 mils (12.7 to 127 $\mu$m) and, comprised of a blend of a polyamide selected from the class consisting of polyhexamethylene adipamide, polyepsiloncaprolactam, or mixtures thereof, the polyamide having a crystallinity of less than 35%, and 10 to 30 percent by weight of said blend, of a polyolefin component, or copolymer thereof, the polyolefin having a crystallinity of less than 70%, wherein said film, exhibits (a) a Graves tear strength of at least 400 grams in the longitudinal direction, as determined by ASTM D-1004-66; (b) a styrene permeability of below $200 \times 10^{-9}$g.cm/cm$^2$-hr, and (c) a peelability such that after maintaining said sandwich structure at 26—32°C for three days, less than 5 percent of the contacting surface of said film has adhered sheet molding compound thereto, after peeling.

2. The process of claim 1 wherein said polyamide is polyepsiloncaprolactam.

3. The process of claims 1 or 2 wherein said polyolefin component, or copolymer thereof, is selected from polyethylene, polypropylene, ethylene/vinyl acetate copolymer, ethylene/ethyl acrylate copolymer, ethylene/methyl acrylate copolymer, or mixtures thereof.

4. The process of claim 1 wherein the polyolefin is an ethylene/vinyl acetate copolymer.

5. A polymeric film for use in the manufacture of sheet molding compound wherein said film is of low crystallinity and comprised of a blend of a polyamide selected from the class consisting of polyepsiloncaprolactam, polyhexamethylene adipamide, or mixtures thereof, the polyamide having a crystallinity of less than 35%, and 10 to 30 weight percent of the blend of a polyolefin component, or copolymer thereof, the polyolefin having a crystallinity of less than 50%, wherein said film is 0.5 to 5 mils (12.7 to 127 $\mu$m) thick and exhibits (a) a Graves tear strength of at least 400 grams in the longitudinal direction, as determined by ASTM-D-1004-66; and (b) a styrene permeability of below $200 \times 10^{-9}$g-cm/cm$^2$-hr.

6. The film of claim 4 wherein said polyamide is polyepsiloncaprolactam, said polyolefin component is ethylene/vinyl acetate copolymer, present in 10—15 weight percent of the blend and said film having a Graves tear strength of at least 400 up to 800 grams.

7. A sandwich structure comprising:

(1) a central layer of reinforced uncured thermosetting sheet molding compound; and

(2) two external polymeric film layers having low crystallinity comprised of a blend of:

    (a) a polyamide selected from the class consisting of polyhexamethylene adipamide, polyepsiloncaprolactam, or mixture thereof, the polyamide having a crystallinity of less than 35%, and

    (b) 10 to 30 percent by weight of said blend, of a polyolefin component, or copolymer thereof, the polyolefin having a crystallinity of less than 70%, said film exhibiting (i) a Graves tear strength of at least about 400 grams in the longitudinal direction, as determined by ASTM D-1004-66; (ii) a styrene permeability of below $200 \times 10^{-9}$ g.cm/cm$^2$-hr; and (iii) a peelability such that after maintaining said sandwich structure at 26—32°C for three days, less than 5 percent of the contacting surface of said film has sheet molding compound adhered thereto, after peeling.

8. The film of claim 6, wherein said film comprises a blend of:

a) polyepsiloncaprolactam, polyhexamethylene adipamide or mixtures thereof, having a crystallinity of between 10—25% and being present in an amount of 85—90 weight percent;

(b) an ethylene/vinyl acetate copolymer having a crystallinity of 20—50% and being present in concentrations of 10—15 weight percent; and

titanium dioxide present in concentrations of between .5 and 1.5 weight percent of the blend of (a)+(b).

## Revendications

1. Procédé de production de produit de compoundage de moulage de feuilles où

(a) une couche de résine thermodurcissable pouvant être cuite thermiquement est coulée, sous forme fluide, sur un film polymère avançant continuellement;

b) une matière de renforcement est introduite sur la couche de fluide avançant;

c) un film polymère est placé en contact avec la surface supérieure de la couche de fluide renforcée en formant ainsi une masse composite prise en sandwich;

d) on fait avancer la masse composite en sandwich à travers une série de rouleaux de pétrissage et de compactage; et

e) on enroule la masse composite en sandwich suivant un rouleau pour la cuisson partielle;

# 0 027 191

caractérisé en ce qu'un film polymère ayant une faible cristallinité est utilisé, ce film ayant une épaisseur de 12,7 à 127 $\mu$m et étant composé d'un mélange d'une polyamide choisie dans la classe se composant de polyhexaméthylèneadipamide, de polyepsiloncaprolactame, ou de leurs mélanges, la polyamide ayant une cristallinité de moins de 35%, et de 10 à 30% en poids, par rapport au mélange, d'un composant de polyoléfine, ou de son copolymère, la polyoléfine ayant une cristallinité de moins de 70%, où le film présente (a) une résistance à la déchirure de Graves d'au moins 400 grammes dans la direction longitudinale, comme déterminé par ASTM D-1004-66; (b) une perméabilité au styrène inférieure à $200 \times 10^{-9}$ g.cm/cm²-h, et (c) une aptitude au pelage telle qu'après avoir maintenu la structure de sandwich à 26—32°C pendant 3 jours, moins de 5% de la surface de contact du film ont le produit de compoundage de moulage de feuilles qui y a adhéré, après pelage.

2. Procédé selon la revendication 1, dans lequel la polyamide est le polyepsiloncaprolactame.

3. Procédé selon les revendications 1 ou 2, dans lequel le composant de polyoléfine, ou son copolymère, est choisi parmi le polyéthylène, le polypropylène, un copolymère éthylène/acétate de vinyle un copolymère éthylène/acrylate d'éthyle, un copolymère éthylène/acrylate de méthyle ou leurs mélanges.

4. Procédé selon la revendication 1, dans lequel la polyoléfine est un copolymère éthylène/acétate de vinyle.

5. Film polymère pour l'utilisation dans la fabrication de produit de compoundage de moulage de feuilles où le film a une faible cristallinité et est composé d'un mélange d'une polyamide choisie dans la classe se composant de polyepsiloncaprolactame, de polyhexaméthylène adipamide, ou de leurs mélanges, la polyamide ayant une cristallinité de moins de 35%, et de 10 à 30% en poids, par rapport au mélange, d'un composant de polyoléfine, ou de son copolymère, la polyoléfine ayant une cristallinité de moins de 50%, où le film a une épaisseur de 12,7 à 127 $\mu$m et présente (a) une résistance à la déchirure de Graves d'au moins 400 grammes dans la direction longitudinale, comme déterminée par ASTM-D-1004-66 et (b) une perméabilité au styrène inférieure à $200 \times 10^{-9}$ g-cm/cm²-h.

6. Film selon la revendication 4, dans lequel la polyamide est le polyepsiloncaprolactame, le composant de polyoléfine est un copolymère éthylène/acétate de vinyle, présent en quantité de 10—15% en poids par rapport au mélange et le film ayant une résistance à la déchirure de Graves d'au moins 400 jusqu'à 800 grammes.

7. Structure de sandwich comprenant:

(1) une couche centrale de produit de compoundage de moulage de feuilles thermodurcissable non cuit renforcé; et

(2) deux couches extérieures de film polymère ayant une faible cristallinité, composée de:

(a) un mélange d'une polyamide choisie dans la classe se composant de polyhexaméthylèneadipamide, de polyepsiloncaprolactame, ou de leurs mélanges, la polyamide ayant une cristallinité de moins de 35%; et

(b) 10 à 30% en poids, par rapport au mélange, d'un composant de polyoléfine, ou de son copolymère, la polyoléfine ayant une cristallinité de moins de 70%, le film présentant (i) une résistance à la déchirure de Graves d'au moins environ 400 grammes dans la direction longitudinale comme déterminée par ASTM-D-1004-66; (ii) une perméabilité au styrène inférieure à $200 \times 10^{-9}$ g.cm/cm²-h et (iii) une aptitude au pelage telle qu'après avoir maintenu la structure de sandwich à 26—32°C pendant 3 jours, moins de 5% de la surface de contact du film a le produit de compoundage de moulage de feuilles qui y adhère, après pelage.

8. Film selon la revendication 6, dans lequel le film comprend un mélange de:

(a) du polyepsiloncaprolactame, de la polyhexaméthylèneadipamide ou leurs mélanges, ayant une cristallinité comprise entre 10 et 25% et étant présent en quantité de 85—90% en poids;

(b) un copolymère éthylène/acétate de vinyle ayant une cristallinité de 20—50% et étant présent à des concentrations de 10—15% en poids; et

— du bioxyde de titane présent à des concentrations comprises entre 0,5 et 1,5% en poids par rapport au mélange de (a)+(b).

## Patentansprüche

1. Verfahren zum Herstellen einer Plattenformmasse, in dem

a) eine Schicht aus einem hitzehärtbaren duroplastischen Harz in fließfähiger Form auf einen sich kontinuierlich vorwärtsbewegenden Polymerisatfilm gegossen wird;

b) Verstärkungsmaterial auf die sich vorwärtsbewegende Schicht aus fließfähigem Gut eingeführt wird;

c) zur Bildung eines sandwichartigen Verbundkörpers ein Polymerisatfilm mit der oberen Fläche der vorstärkten Schicht aus dem fließfähigen Gut in Berührung gebracht wird;

9

d) der sandwichartige Verbundkörper zwischen einer Reihe von Knet- und Verdichtungswalzen hindurchgeführt wird; und

e) der sandwichartige Verbundkörper zum Teilhärten zu einer Rolle aufgewickelt wird;

dadurch gekennzeichnet, dass in ein Polymerisatfilm verwendet wird, der eine geringe Kristallinität und eine Dicke von 12,7 bis 127 $\mu$m besitzt und aus einem Gemisch aus einem Polyamid und einem Polyolefin oder einem Polyolefinkopolymerisat besteht, wobei das Polyamid aus der Klasse Polyhexamethylenadipamid, Poly-$\varepsilon$-Caprolactam und Gemischen derselben ausgewählt ist und eine Kristallinität von weniger als 35% besitzt, das Polyolefin bzw. Polyolefinkopolymerisat 10 bis 30 Gew.% des Gemisches ausmacht und eine Kristallinität von weniger als 70% besitzt, und der Film (a) bei Bestimmung nach ASTM D-1004-66 in der Längsrichtung eine Graves-Reißfestigkeit von mindestens 400 g besitzt, (b) eine Styroldurchlässigkeit unter $200 \times 10^{-9}$ g cm/cm$^2$-h besitzt und (c) eine solche Abschälfestigkeit besitzt, dass nach einer Lagerung des sandwichartigen Verbundkörpers bei 26 bis 32°C für drei Tage nach dem Abschälen des Films an weniger als 5% seiner Berührungsfläche Plattenformmasse anhaftet.

2. Verfahren nach Anspruch 1, dadurch gekennzeichnet, dass das Polyamid Poly-$\varepsilon$-Caprolactam ist.

3. Verfahren nach Anspruch 1 oder 2, dadurch gekennzeichnet, dass die Polyolefinkomponente oder das Polyolefinkopolymerisat ausgewählt ist aus Polyethylen, Polypropylen, Ethylen-Vinylacetat-Kopolymerisat, Äthylen-Ethylacrylat-Kopolymerisat, Ethylen-Methylacrylat-Kopolymerisat oder Gemischen derselben.

4. Verfahren nach Anspruch 1, dadurch gekennzeichnet, dass das Polyolefin ein Ethylen-Vinylacetate-Kopolymerisat ist.

5. Polymerisatfilm zur Verwendung bei der Herstellung einer Plattenformmasse, der eine geringe Kristallinität besitzt und aus einem Gemisch aus einem Polyamid und einem Polyolefin oder einem Polyolefinkopolymerisat besteht, wobei das Polyamid aus der Klasse Polyhexamethylenadipamid, Poly-$\varepsilon$-Caprolactam und Gemischen derselben ausgewählt ist und eine Kristallinität von weniger als 35% besitzt, das Polyolefin bzw. Polyolefinkopolymerisat 10 bis 30 Gew.% des Gemisches ausmacht und eine Kristallinität von weniger als 50% besitzt und der Film eine Dicke von 12,7 bis 127 $\mu$m hat und (a) bei Bestimmung nach ASTM D-1004-66 in der Längsrichtung eine Graves-Reißfestigkeit von mindestens 400 g und (b) eine Styroldurchlässigkeit von weniger als $200 \times 10^{-9}$ g-cm/cm$^2$-h besitzt.

6. Polymerisatfilm nach Anspruch 4, dadurch gekennzeichnet, dass das Polyamid Poly-$\varepsilon$-Caprolactam ist, dass das Polyolefin Ethylen-Vinylacetatkopolymerisat und in einer Menge von 10 bis 15 Gew.% des Gemisches vorhanden ist und der Film eine Graves-Reißfestigkeit von mindestens 400 bis 800 g besitzt.

7. Sandwich-Verbundkörper, umfassend

(1) eine mittlere Schicht aus verstärkter, ungehärteter duroplastischer Plattenformmasse und

(2) zwei äußere Polymerisatfilmschichten, die eine geringe Kristallinität besitzen und bestehen aus einem Gemisch aus

(a) einem Polyamid, das aus der Klasse Polyhexamethylenadipamid, Poly-$\varepsilon$-caprolactam oder einem Gemisch derselben ausgewählt ist und eine Kristallinität von weniger als 35% hat und

(b) in einer Menge von 10 bis 30 Gew.% des Gemisches aus einem Polyolefin oder Polyolefinkopolymerisat, das eine Kristallinität von weniger als 70% hat, wobei der Film (i) bei Bestimmung nach ASTM D-1004-66 eine Graves-Reißfestigkeit von mindestens etwa 400 g besitzt, (ii) eine Styroldurchlässigkeit von weniger als $200 \times 10^{-9}$ g-cm/cm$^2$-h besitzt und (iii) eine solche Abschälfestigkeit besitzt, dass nach einer Lagerung des sandwichartigen Verbundkörpers bei 26 bis 32°C für drei Tage nach dem Abschälen des Films an weniger als 5% seiner Berührungsfläche Plattenformmasse anhaftet.

8. Film nach Anspruch 6, dadurch gekennzeichnet, daß der Film aus einem Gemisch folgender Bestandteile besteht:

(a) 85 bis 90 Gew.% Poly-caprolactam, Plyhexamethylenadipamid oder deren Gemische, mit einer Kristallinität von 10 bis 25%;

(b) ein Ethylen-Vinylacetat-Copolymer mit einer Kristallinität von 20 bis 50%, in einer Konzentration von 10 bis 15 Gew.%; und

Titandioxid in einer Konzentration von 0,5 bis 1,5 Gew.% des Gemisches von (a)+(b).